# EUROPÄISCHE PATENTSCHRIFT

(11) **EP 1 854 672 B1**
(45) Veröffentlichungstag und Bekanntmachung des Hinweises auf die Patenterteilung: **13.06.2012**
(21) Anmeldenummer: 07002245.4
(22) Anmeldetag: 02.02.2007
(51) Int. Cl.: B60N 2/46, B60R 7/04

(54) **Aufbewahrungseinrichtung für eine Mittelkonsole eines Kraftfahrzeuges, sowie Mittelkonsole für ein Kraftfahrzeug**
Storage device for the centre console of a motor vehicle and centre console for a motor vehicle
Dispositif de stockage pour une console intermédiaire de véhicule automobile et console intermédiaire pour véhicule automobile

(30) Priorität: 10.05.2006 DE 102006021685
(43) Veröffentlichungstag der Anmeldung: 14.11.2007
(73) Patentinhaber: Volkswagen Aktiengesellschaft, 38436 Wolfsburg (DE)
(72) Erfinder: Baum, Andreas, 38106 Braunschweig (DE); Ring, Sascha, 30177 Hannover (DE)

(56) Entgegenhaltungen:
- EP-A- 1 873 015
- DE-A1- 10 359 294
- DE-A1-102004 011 306
- JP-A- 10 024 770

## Beschreibung

Die vorliegende Erfindung betrifft eine Aufbewahrungseinrichtung für eine Mittelkonsole eines Kraftfahrzeuges gemäß dem Oberbegriff des Anspruchs 1.

Eine Aufbewahrungseinrichtung für den Einbau in eine Mittelkonsole eines Kraftfahrzeuges mit Längs- und Querelementen zur Unterteilung in verschiedene Fächer, wobei der obere Rand des Aufbewahrungseinrichtung und die Oberkante des Längselementes mit rasterförmig angeordneten Vertiefungen versehen sind, in die an den Längs und Querelementen seitlich angeordnete, radial abstehende Vorsprünge einrasten, und dass die Unterkanten der Längs- und Querelemente mit Zapfen versehen sind, die in Bohrungen des Bodens des Aufbewahrungseinrichtung eingreifen ist aus dem deutschen Gebrauchsmuster G 92 02 354 bekannt geworden. Die zuvor genannte Aufbewahrungseinrichtung ist jedoch mit Nachteilen behaftet. Zwar können die Fächer, insbesondere kann die Größe der Fächer, durch Umsetzen der Längs- und Querelemente angepasst werden, jedoch können die Quer- und Längselemente entnommen werden und damit auch verloren gehen. Denkbar ist selbstverständlich auch, dass sich die Quer- und Längselemente unbeabsichtigt lösen und aus diesem Grunde verloren gehen können, abgesehen davon, dass die Ordnung der in den Fächern aufgenommene Gegenstände ebenfalls verloren geht.

Die DE 10 2004 011 306 A1 offenbart eine Aufbewahrungseinrichtung für eine Mittelkonsole eines Kraftfahrzeuges, umfassend einen wannenförmigen Aufnahmebehälter beziehungsweise Schacht mit zwei Aufnahmeeinrichtungen, wobei der Aufnahmebehälter mit mindestens einem Teilungselement ausgestattet ist wobei das Teilungselement dazu eingerichtet ist, den Aufnahmebehälter in mindestens zwei Fächer zu unterteilen, wobei die Aufbewahrungseinrichtung darüber hinaus mit mindestens einem Führungsmittel ausgestattet ist, welches dazu eingerichtet ist, eine stufenlose Verschiebung des mindestens einen Teilungselementes innerhalb des Aufnahmebehälters zu ermöglichen.

Die Aufgabe der vorliegenden Erfindung besteht darin, eine Aufbewahrungseinrichtung vorzuschlagen, die mit einem Teilungselement ausgestattet ist, wobei das Teilungselement an unterschiedliche Abmessungen, insbesondere Höhen des Aufnahmebehälters angepasst werden kann. Erfingdungsgemäß wird diese Aufgabe durch eine Aufbewahrungseinrichtung der eingangs genannten Art mit den kennzeichnenden Merkmalen des Anspruchs 1 gelöst. Dadurch, dass das mindestens eine Teilungselement teleskopierbar ausgestaltet ist, kann das Teilungselement an unterschiedliche Höhen eines Aufnahmebehälters angepasst werden, d.h. das Teilungselement kann bei einem Aufnahmebehälter, dessen Wandhöhe beispielsweise in Längsrichtung abnimmt, an einer beliebigen Position eingesteckt werden. In beiden Situationen kann eine optimale und vollständige Unterteilung in einzelne Fächer sichergestellt werden.

Weitere vorteilhafte Ausgestaltungen der erfindungsgemäßen Aufbewahrungseinrichtung ergeben sich aus den Merkmalen der rückbezogenen Unteransprüche.
- Fig. 1a bis 1c: eine erste Ausführungsform einer Aufbewahrungseinrichtung;
- Fig. 2a bis 2c: eine zweite Ausführungsform einer Aufbewahrungseinrichtung ;
- Fig. 3a und 3b: eine dritte Ausführungsform einer Aufbewahrungseinrichtung;
- Fig. 4a und 4b: eine vierte Ausführungsform einer Aufbewahrungseinrichtung;
- Fig. 5: eine fünfte Ausführungsform einer Aufbewahrungseinrichtung;
- Fig. 6: eine sechste Ausführungsform einer Aufbewahrungseinrichtung;
- Fig. 7: eine Aufbewahrungseinrichtung;
- Fig. 8a und 8b: eine erfindungsgemäße Aufbewahrungseinrichtung;
- Fig. 9a bis 9c: eine Mittelkonsole
- Fig. 10: eine Mittelkonsole;
- Fig. 11 und 11b: eine Mittelkonsole.

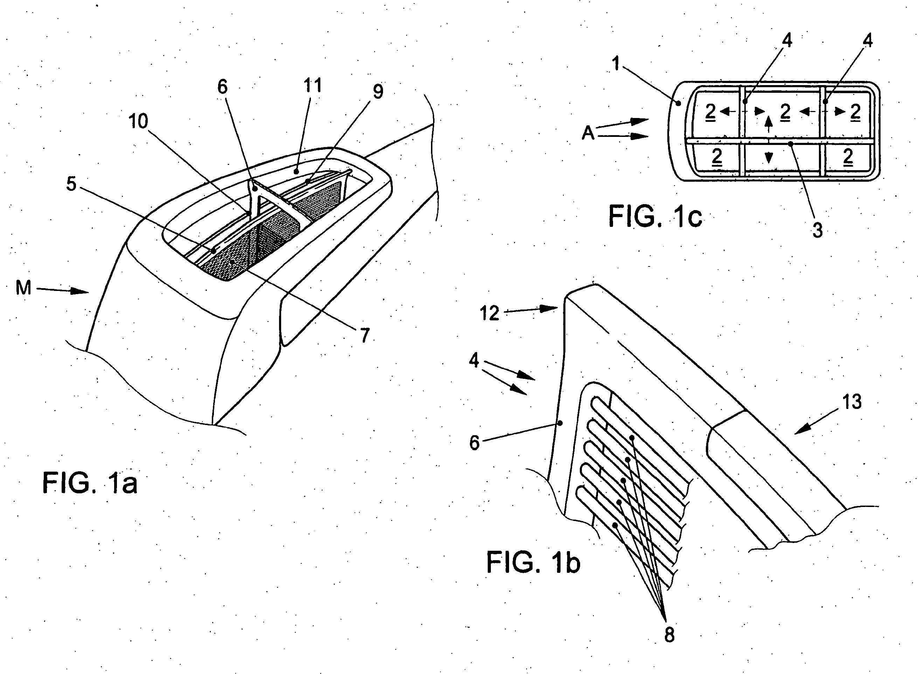

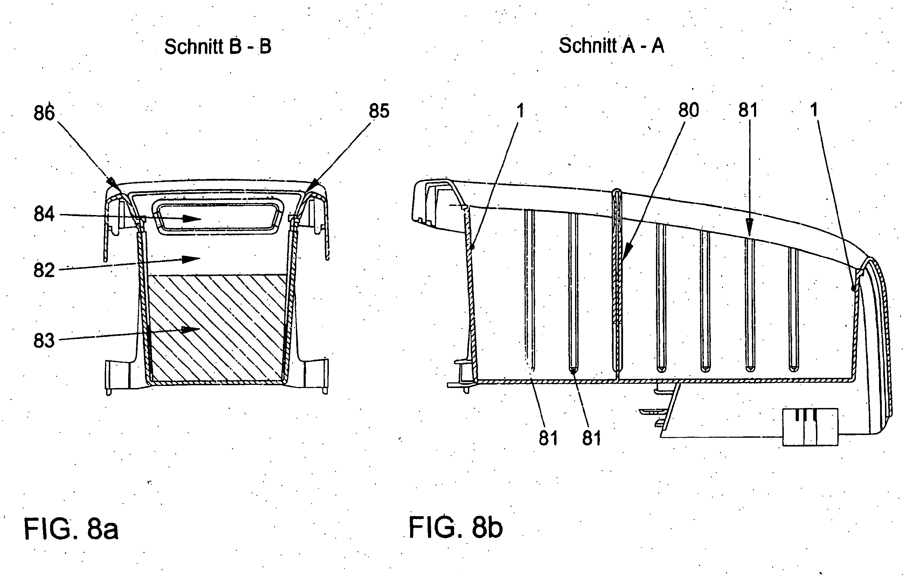

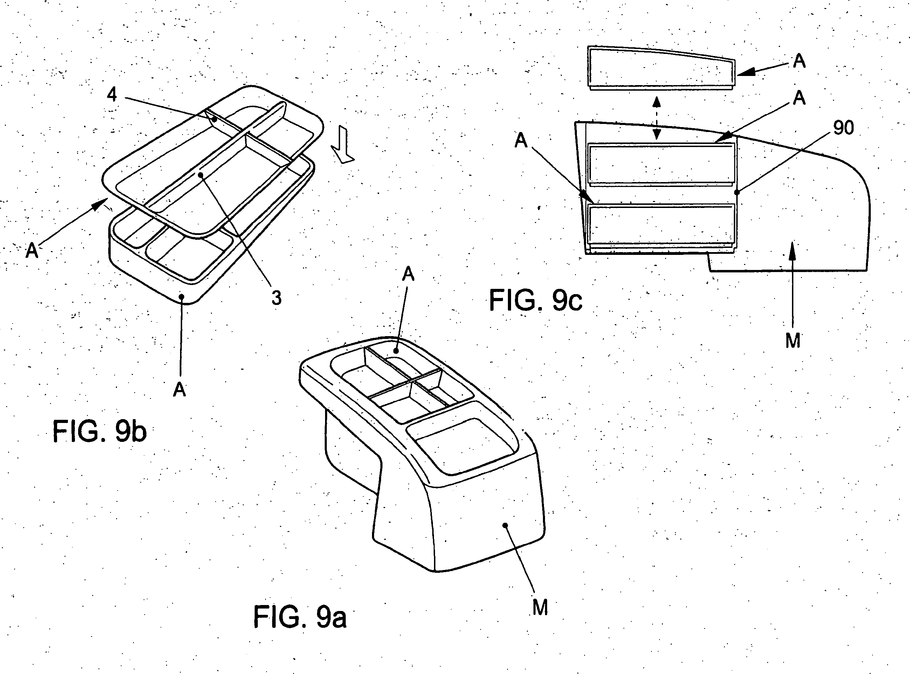

In Fig. 8a und 8b ist ein Ausführungsbeispiel einer erfindungsgemäßen Aufbewahrungseinrichtung A dargestellt. Bei den In Fig.1a bis Fig. 7 sowie in Fig. 9a bis Fig. 11b gezeigten Aufbewahrungseinrichtungen A handelt es sich nicht um Ausführungsformen der vorliegenden Erfindung, sondern um weitere Beispiele, die das Verständnis der Erfindung erleichtern sollen.

Eine Aufbewahrungseinrichtung A zum Einbau in eine Mittelkonsole M umfasst im Wesentlichen einen wannenförmigen Aufnahmebehälter 1, wobei ein Längselement 3 und ein Querelement 4 zur Unterteilung des Aufnahmebehälters 1 in einzelne Fächer 2 vorgesehen ist. Das Längselement 3 und das Querelement 4 sind verschiebbar innerhalb des Aufnahmebehälters 1 über Führungsmittel aufgenommen.

Zunächst wird auf die Fig. 1a bis 1c Bezug genommen, in der eine erste Ausführungsform einer Aufbewahrungseinrichtung 1 abgebildet ist.

Das Längselement 3 umfasst einen rechteckförmigen Rahmen 5, wobei eine Anzahl von Schnüren 7 parallel Innerhalb des Rahmens 5 aufgespannt sind. Auch das Querelement 4 umfasst einen rechteckförmigen Rahmen 6, wobei eine Anzahl von Schnüren 8 parallel innerhalb des Rahmens 6 aufgespannt sind. Das Längselement 3 erstreckt sich im Wesentlichen entlang der Längsrichtung des Aufnahmebehälters 1, während sich das Querelement 4 quer zur Längsrichtung des Aufnahmebehälters 1 erstreckt. Das Längselement 3 und das Querelement 4 sind demnach orthogonal zueinander ausgerichtet.

Ein Führungsmittel ist wie folgt ausgestaltet. Das Längselement 3 und das Querelement 4 sind derart ineinander gesteckt, dass die Schnüre 8 des Querelementes 4 die Schnüre 7 des Längselementes 3 abwechselnd übereinander angeordnet sind. Folglich durchkämmen die Schnüre 7 die Schnüre 8 sofern das Längselement 3 bewegt wird und die Schnüre 8 die Schnüre 7, sofern das Querelement 4 bewegt wird. Die Anordnung der Schnüre 7, 8 bildet dementsprechend ein Führungsmittel, welches dazu eingerichtet ist, das Längselement 3 und das Querelement 4 miteinander zu verbinden, jedoch eine Verschiebung des Längselementes 3 und des Querelementes 4 relativ zueinander und gegenüber dem Aufnahmebehälter 1 zu ermöglichen Es ist vorteilhafterweise vorgesehen, dass die Schnüre 7, 8 relativ eng aneinander anliegen, so dass das Längselement 3 und das Querelement 4 präzise geführt werden können. Sofern von einem kartesischen Koordinatensystem ausgegangen wird, dessen Z-Achse senkrecht auf dem Boden des Aufnahmebehälters 1 steht und dessen X-Achse der Längsachse des Aufnahmebehälters 1 entspricht, ist das Längselement 3 in Y-Richtung und das Querelement in X-Richtung bewegbar. In Z-Richtung arretieren sich Längselement 3 und Querelement 4 durch das oben beschriebene "Kammprinzip". Entsprechend kann durch eine wahlweise Verschiebung des Längselements 3 und/oder des Querelements 4 die Größe der Fächer 2 variabel angepasst werden.

Die hier gezeigte Ausführungsform weist ein weiteres Führungsmittel auf. Das Führungsmittel umfasst Laufschienen 9, die als Nuten oder Vertiefungen innerhalb der Wand des Aufnahmebehälters 1 ausgebildet sein können, sowie korrespondierende Anschlusselemente 10, beispielsweise in Form von Vorsprüngen, an den Längselementen 3 und/oder den Querelementen 4, die in die Laufschienen 5 eingreifen können. Vorzugsweise sind die Laufschienen 9 in Längsrichtung und in Querrichtung des Aufnahmebehälters 1 ausgerichtet. Das zweite Führungsmittel fixiert damit das Längselement 3 und das Querelement 4 gegenüber dem Aufnahmebehälter 1 in Z-Richtung, ermöglicht jedoch die Verschiebung des Längselements 3 in Y-Richtung und des Querelements 4 in X-Richtung.

Ein weiteres Führungsmittel kann als Aussparung 11 im oberen Randbereich des Aufnahmebehälters 1 und als korrespondierende Nase 12 des Längselements 3 bzw. des Querelements 4 ausgestaltet sein. Insbesondere in Fig. 1a ist der obere Randbereich des Aufnahmebehälters 1 erkennbar, der sich in Richtung des Bodens der Aufbewahrungseinrichtung über einen kurzen Abschnitt der Wand des Aufnahmebehälters 1 verjüngt. Entsprechend der Verjüngung ist der obere Bereich des Längselements 3 bzw. des Querelements 4 als Nase 12 ausgestaltet, so dass die zuvor genannten Elemente durch deren Nasen 12 in der Aussparung 11 geführt werden können.

Ferner kann vorgesehen sein, dass das Querelement 4 und / oder das Längselement 3 mit einer lösbaren Verriegelung 13 ausgestattet sind, die dazu eingerichtet ist, das Querelement 4 und / oder das Längselement 3 auf einer vorbestimmten Position im Bezug auf den Aufnahmebehälter 1 zu arretieren. Dementsprechend kann eine vom Benutzer eingestellte Unterteilung des Aufnahmebehälters 1 in einzelne Fächer 2 fixiert werden.

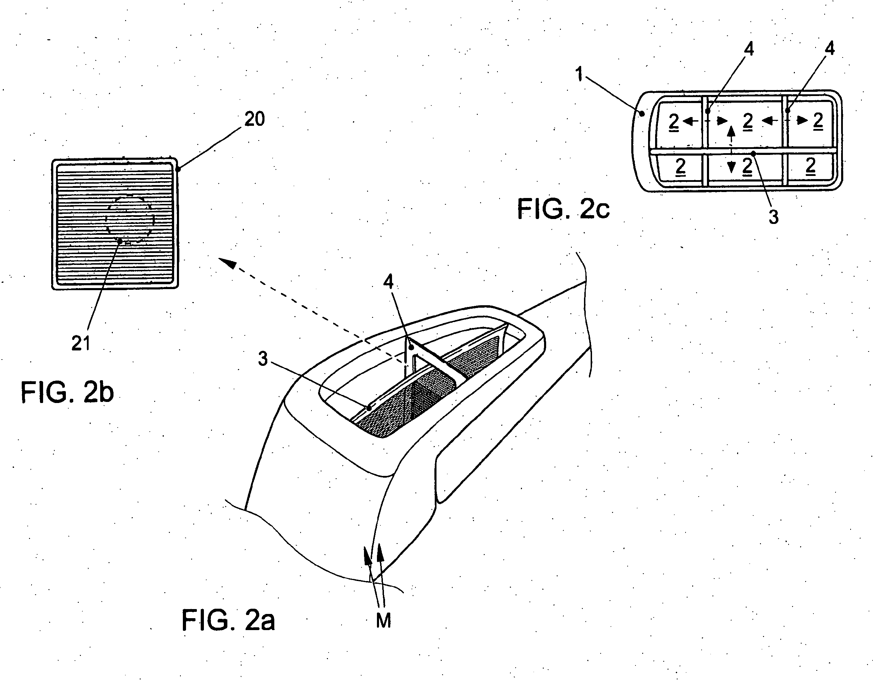

Eine weitere Ausführungsform einer Aufbewahrungseinrichtung A ist in den Fig. 2a bis 2c dargestellt. Die hier vorgeschlagene Aufbewahrungseinrichtung A ist im Wesentlichen mit der Ausführungsform gemäß Fig. 1a bis 1c vergleichbar. Vorgeschlagen wird jedoch, ein Längselement 3 und ein Querelement 4 welches einstückig ausgebildet und vorzugsweise aus einem Kunststoff hergestellt ist. Die hier vorgeschlagene Ausführungsform weist einen Rahmen 20 mit einer innenliegenden Kammstruktur 21 auf. Folglich kann auf die Kombination aus Rahmen und Innerhalb des Rahmens aufgespannte Schnüre verzichtet werden. Ansonsten weist auch diese Ausführungsform ein Führungsmittel nach dem oben bereits beschriebenen "Kammprinzip" auf.

Ferner kann auch diese Ausführungsform mit weiteren Führungsmitteln, als auch mit einer Verriegelung 13 und/oder weiteren Längselementen 3 und/oder Querelementen 4 ausgestattet sein.

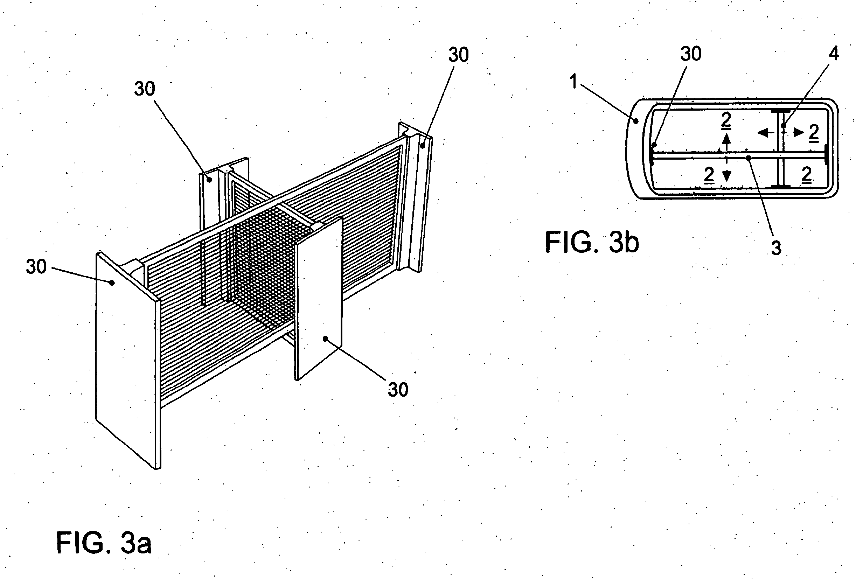

In den Fig. 3a und 3b ist ein Längselement 3 und ein Querelement 4 einer weiteren Ausführungsform der Aufbewahrungseinrichtung A abgebildet. Das hier vorgeschlagene Längselement 3 und Querelement 4 weist ein weiteres Führungsmittel auf, welches als Kufe 30, insbesondere als Anzahl von Kufen 30, ausgestaltet ist, die jeweils an den der Wand des Aufnahmebehälters 1 zugewandten Enden des Längselements 3 und des Querelements 4 angebracht sind. Die Kufen 30 sind dazu eingerichtet auf der Wand des Aufnahmebehälters 1 zu gleiten. Auch sind sie dazu eingerichtet nicht zu verkanten. Die komplett montierte Anordnung aus Längselement 3 und Querelement 4 kann unmittelbar in den Aufnahmebehälter 1 eingesetzt werden und zur Fixierung im oberen Bereich des Aufnahmebehälters 1 verrasten.

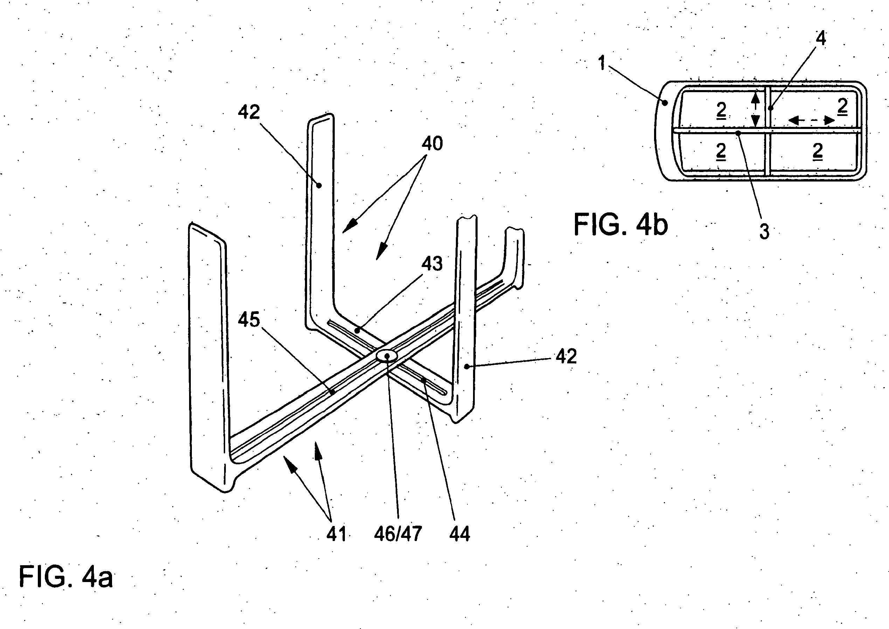

In Fig. 4a und 4b ist ein weiteres Führungsmittel für eine Aufbewahrungseinrichtung A dargestellt. Das hier vorgeschlagene Führungsmittel weist im Wesentlichen einen ersten U-förmigen Aufnahmerahmen 40 für ein Längselement 3 und einen zweiten U-förmigen Aufnahmerahmen 41 für ein Querelement 4 auf. Der U-förmigen Aufnahmerahmen 40, 41 weist zwei Seitenschenkel 42 und einen Bodenschenkel 43 auf. Der Bodenschenkel 43 der U-förmigen Aufnahmerahmen 40, 41 ist jeweils mit einem Langloch 44, 45 ausgestattet. Durch die Langlöcher 44, 45 der Aufnahmerahmen 40, 41 ist ein Splint 46 gesteckt, so dass die Aufnahmerahmen 40, 41 entsprechend der Ausrichtung der Langlöcher 40, 41 verschoben werden können. Gleichermaßen kann der Splint 46 mit Kappen 47 versehen sein, so dass die Aufnahmerahmen 40, 41 unlösbar, jedoch verschiebbar miteinander verbunden sind. Es kann weiterhin vorgesehen sein, dass der Splint 46 mit dem Boden des Aufnahmebehälters 1 verbunden ist, so dass die Aufnahmerahmen 40, 41 gleichermaßen mit dem Aufnahmebehälter 1 verbunden sind. Ein Längselement 3 und ein Querelement 4 können in die jeweiligen Aufnahmerahmen 40, 41 eingesetzt werden. Auf diese Art und Weise ergibt sich eine besonders vorteilhafte Führung für die Längs- und Querelemente 3, 4, die einerseits durch das "Kammprinzip" und andererseits durch die Langlochführung der Aufnahmerahmen geführt werden. Das hier vorgeschlagene System kann nicht verkanten, da es innerhalb der Wände des Aufnahmebehälters 1 geführt wird. Ferner können die Seitenschenkel 42 mit den bereits oben vorgeschlagenen Kufen 30 ausgestattet sein, so dass sich weiterhin eine vorteilhafte Führung entlang der Seitenwände des Aufnahmebehälters 1 ergibt.

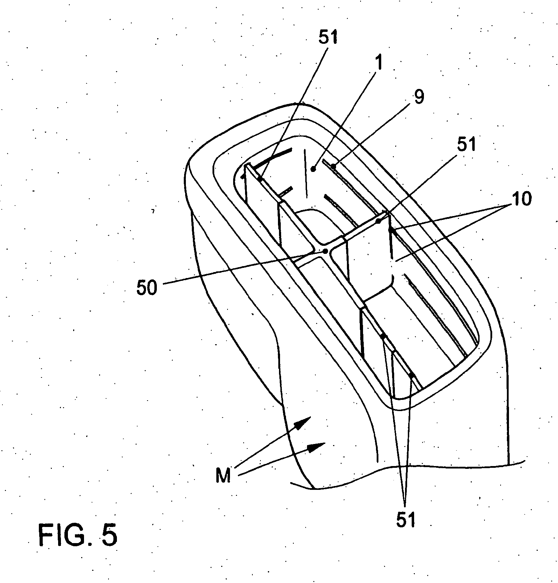

Eine weitere Ausführungsform ist in der Fig. 5 dargestellt. Ein Führungsmittel wird hier durch die Teleskopierbarkeit der Längselemente 3 und Querelemente 4 bereitgestellt. Es ist erkennbar, dass die Längselemente 3 und die Querelemente 4 aus einem Mittelstück 50 mit vier rechtwinkelig zueinander ausgerichteten Teleskopelementen 51 bestehen. Die Anordnung aus teleskopierbaren Längs- und Querelementen wird, wie aus der Fig. 5 zu entnehmen ist, in den Aufnahmebehälter 1 eingesetzt. Es ist weiterhin erkennbar, dass auch diese Ausführungsform mit wandseitig des Aufnahmebehälters angebrachten Laufschienen 9 ausgestattet ist, wobei mindestens das Querelement 4 und / oder das Längselement 3 mit einem zu der Laufschiene 9 korrespondierenden Anschlusselement 10 ausgestattet ist. Das Mittelstück 50 kann beispielswelse von dem Benutzer erfasst und innerhalb des Aufnahmebehälters 1 verschoben werden. Gleichermaßen ändern sich die Abmessungen und Lage der Fächer 2, die durch die Längs- und Querelemente 3, 4 begrenzt werden.

Sofern von einem innerhalb des Aufbewahrungseinrichtung aufgespannten kartesischen Koordinatensystem ausgegangen wird, kann durch die oben genannten Ausführungsformen der Aufbewahrungseinrichtung gemäß den Fig. 1a bis 5 eine Variabilität in XZ- und YZ-Ebene sichergestellt werden. Es kann ferner vorgesehen sein, wie beispielsweise in Fig. 1c angedeutet, dass mehrere Querelemente 4, beispielsweise zwei Querelemente 4, vorgesehen sind. Auch können mehrere Längselemente 3 vorgesehen sein.

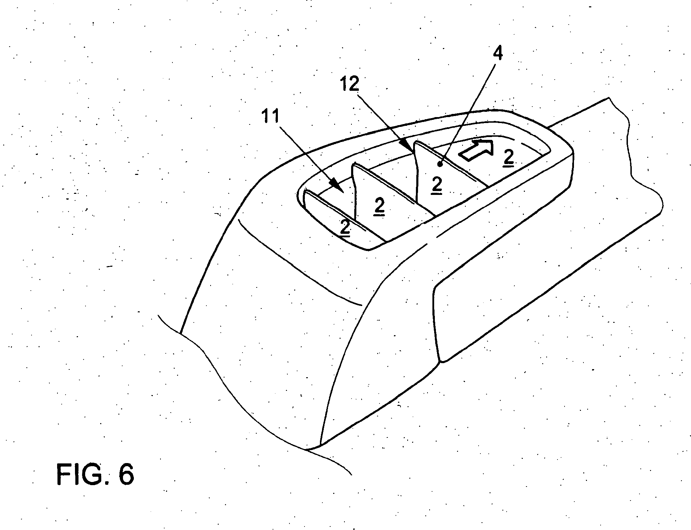

Eine weitere Ausführungsform einer Aufbewahrungseinrichtung A ist in der Fig. 6 dargestellt. Die hier vorgeschlagene Aufbewahrungseinrichtung A umfasst im Wesentlichen einen Aufnahmebehälter 1, sowie eine Anzahl von Querelementen 4, die nach Art einer Hängeregistratur innerhalb des Aufnahmebehälters 1 aufgenommen sind. Die Querelemente 4 unterteilen den Aufnahmebehälter 1 in entsprechende Fächer 2, wobei die Abmessung der Fächer 2 durch ein Verschieben der Querelemente 4 verändert werden kann. Bei dem Querelement 4 handelt es sich im Wesentlichen um ein flächiges Element, dessen Abmessungen im Wesentlichen dem Querschnitt des Aufnahmebehälters 1 entspricht. Die Hängeregistratur ist als Aussparung 11 im oberen Randbereich des Aufnahmebehälters 1 ausgestaltet, wobei die Querelemente 4 jeweils kopfseitig mit Nasen 12 ausgestattet sind, die in den oberen Randbereich eingehangen werden können. Denkbar sind auch weitere Führungsmittel nach Art des oben bereits beschriebenen Führungsmittels.

Grundsätzlich können die oben vorgeschlagenen Aufbewahrungseinrichtungen A, je nach Anwendungsfall, mit einem oder mehreren der oben beschriebenen Führungsmittel ausgestattet sein. Die vorgeschlagenen bevorzugten Ausführungsformen stellen nur eine Auswahl der denkbaren Kombinationen dar.

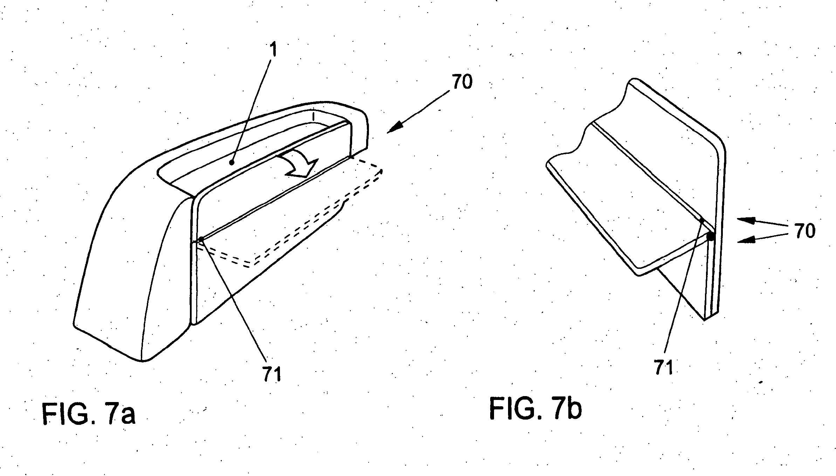

Eine weitere Aufbewahrungseinrichtung A für eine Mittelkonsole ist in Fig. 7a und 7b abgebildet. Die Aufbewahrungseinrichtung A umfasst im Wesentlichen einen Aufnahmebehälter 1, sowie ein Klappelement 70. Bei dem Klappelement 70 handelt es sich um ein flächiges Element, welches um eine Achse 71 klappbar ist, die vorzugsweise entlang des Bodens des Aufnahmebehälters 1 verläuft. Eine bevorzugte Ausrichtung der Achse 71 ist die Längsrichtung des Aufnahmebehälters 1, wie in Fig. 7b erkennbar. Das Klappelement 70 kann wahlweise aufgestellt sein oder flach auf dem Boden liegen. Entsprechend kann der Aufnahmebehälter 1 wahlweise in zwei Fächer 2 unterteilt werden. Vorzugsweise ist das Klappelement 70 mit einer geeigneten Arretierungseinrichtung ausgestattet, die eine lösbare Fixierung in einer aufgestellten Lage ermöglicht.

Eine erfindungsgemäße Aufbewahrungseinrichtung A für eine Mittelkonsole ist in Fig. 8a und 8b abgebildet. Die hier vorgeschlagene Aufbewahrungseinrichtung A umfasst im Wesentlichen einen wannenförmigen Aufnahmebehälter 1, wobei mindestens ein Teilungselement 80 vorgesehen ist, welche den Aufnahmebehälter 1 in eine Anzahl von Fächern 2 untertellen können Der Aufnahmebehälter 1 ist mit einer Anzahl von Führungsschlitzen 81 ausgestattet, die sich senkrecht vom Boden des Aufnahmebehälters 1 erstrecken und an gegenüberliegenden Seiten der Wände des Aufnahmebehälters 1 angebracht sind. Vorzugsweise sind die Führungsschlitze an den Wänden entlang der Längsachse des Aufnahmebehälters 1 angeordnet. Es ist weiterhin vorgesehen, dass die Teilungselemente 80 teleskopierbar ausgestaltet sind. Insbesondere umfassen die Teilungselemente 80 eine Formhälfte 82 und eine Teleskopwand 83, wobei die Teilungselemente 80 der Länge nach ineinander verschoben werden können. Darüber hinaus kann vorgesehen sein, dass die Formhälfte 82 zumindest abschnittsweise als Griffbereich 84 ausgestaltet ist. Der Vorteil, der sich aus den teleskopierbaren Teilungselementen 80 ergibt, wird insbesondere deutlich, wenn der Aufnahmebehälter 1 unterschiedliche Abmessungen, insbesondere unterschiedliche Höhen entlang der Längsachse aufweist. Es ist beispielsweise erkennbar, dass die Wand am linken Ende des Aufnahmebehälters 1 höher ist als am rechten Rand des Aufnahmebehälters 1. Die Höhe der Seitenwände fällt in etwa gleichmäßig entlang der Längsachse ab. Entsprechend weisen auch die Führungsschlitze 81 unterschiedliche Längen auf, wobei das Teilungselement 80 in jeden Führungsschlitz 81 eingesteckt werden kann und sich der jeweiligen Länge des Führungsschlitzes 81 anpassen kann. Entsprechend muss nur eine Art von Teilungselement 80 bevorratet werden. Es ist ferner vorgesehen, dass das Teilungselement 80 mit einer Nase 85 ausgestattet ist, die zum Einstecken in eine Aussparung im Kopfbereich des Aufnahmebehälters 1 geeignet ist. Die Nase 85 wirkt entsprechend wie ein Anschlag, während sich die Teleskopwand auf dem Boden des Aufnahmebehälters 1 aufsetzt.

Es kann grundsätzlich vorgesehen sein, dass die erfindungsgemäße Aufbewahrungseinrichtung an einer vorbestimmten, meist festen Position innerhalb der Mittelkonsole eines Kraftfahrzeuges eingesetzt ist. Denkbar sind jedoch auch weitere, variable Konzepte, wie nachfolgend für eine Mittelkonsole M vorgeschlagen.

In Fig. 9a bis 9c ist eine Mittelkonsole M dargestellt, die ein variables Konzept verfolgt. Es wird eine Mittelkonsole M mit einem Schacht 90 vorgeschlagen, wobei der Schacht 90 zur Aufnahme mindestens zweier Aufbewahrungseinrichtungen A geeignet ist. Vorzugsweise ist der Schacht 90 derart ausgestaltet, dass die Aufbewahrungseinrichtungen A stapelbar, d.h. übereinander aufgenommen werden können. Sofern beispielsweise von unterschiedlich aufgeteilten Aufbewahrungseinrichtungen A ausgegangen wird, kann die jeweils gewünschte Aufbewahrungseinrichtung A im Kopfbereich des Schachtes 90 angeordnet sein, wohingegen der oder die nicht benötigten Aufbewahrungseinrichtungen A unterhalb der obersten Aufbewahrungseinrichtung A angeordnet sind.

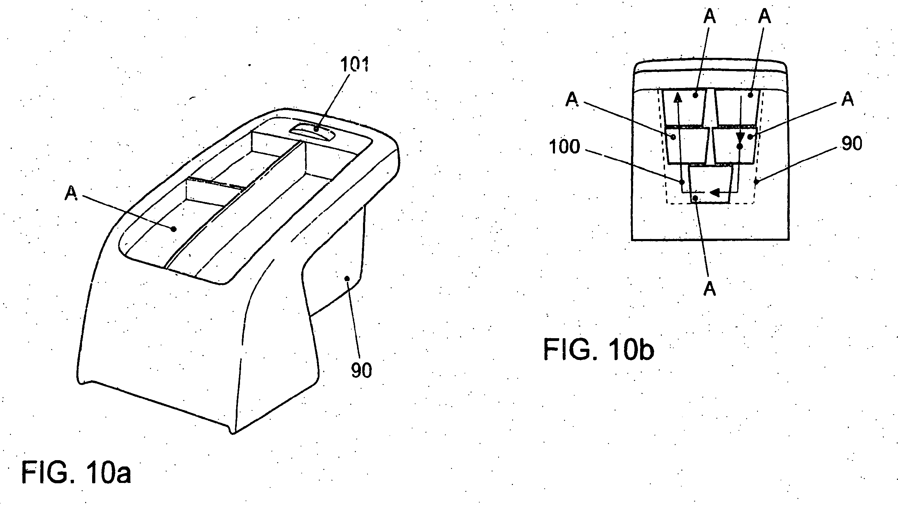

Eine weitere Mittelkonsole M ist in den Fig. 10a und 10b dargestellt. Auch hier sind eine Anzahl von Aufbewahrungseinrichtungen A in einer Mittelkonsole M untergebracht. Es wird vorgeschlagen die Aufbewahrungseinrichtung A nach dem Prinzip eines Paternosteraufzugs 100 innerhalb eines Schachtes 90 der Mittelkonsole M aufzuhängen. In der hier vorgeschlagenen Ausführungsform sind beispielsweise fünf Aufbewahrungseinrichtung A vorgesehen, wobei sich zwei Aufbewahrungseinrichtung A in einem oberen, dem Benutzer zugänglichen Teil des Schachtes 90 befinden. Es ist erkennbar, dass drei weitere Aufbewahrungseinrichtung A in einem unteren Bereich des Schachtes 90 angeordnet sind. Es ist nunmehr möglich und in Fig. 10b angedeutet, dass die Position der Aufbewahrungseinrichtungen A entsprechend geändert werden kann, insbesondere können die Aufbewahrungseinrichtung A aus einem unteren, dem Benutzer unzugänglichen Bereich in einen oberen, dem Benutzer zugänglichen Bereich verfahren werden. Entsprechend kann eine ursprünglich zugängliche Aufbewahrungseinrichtung A in einen unteren, für den Benutzer unzugänglichen Bereich verfahren werden. Hierzu kann beispielsweise eine manuelle Antriebseinrichtung in Form eines Handrades 101 vorgesehen sein, mit dem die Aufbewahrungseinrichtung A auf einer vorgegebenen Bahn bewegt werden kann. Denkbar sind selbstverständlich auch motorbetriebene Antriebssysteme.

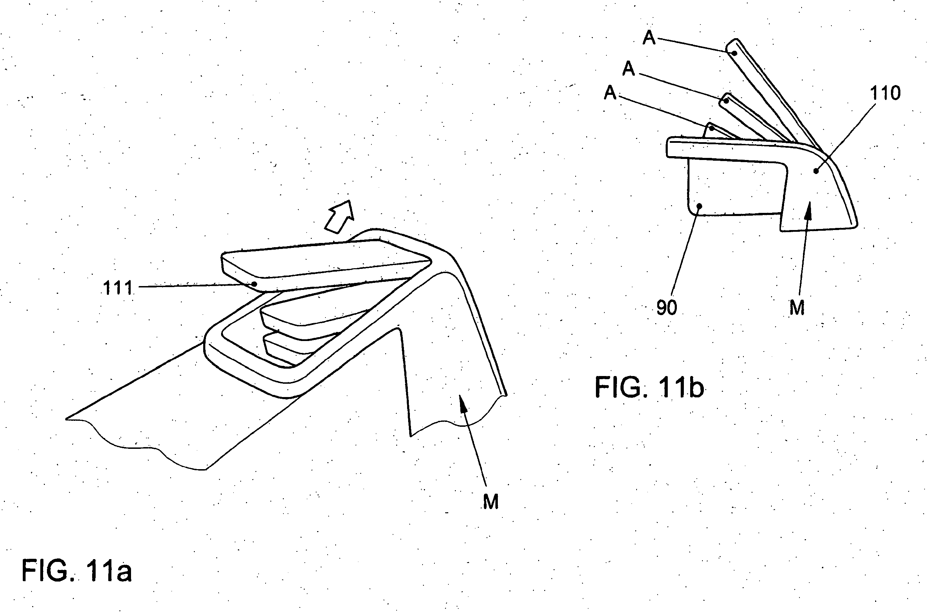

Eine weitere Mittelkonsole ist in Fig. 11a und 11b dargestellt. Auch hier ist vorgesehen, dass die Mittelkonsole M einen Schacht 90 zur Aufnahme einer Anzahl von Aufbewahrungseinrichtungen A aufweist, wobei die Aufbewahrungseinrichtungen A schwenkbar von einer Achse 110 aufgenommen sind, wobei die Achse 110 im Wesentlichen quer zur Längsachse der Mittelkonsole M verläuft. Dementsprechend können die Aufbewahrungseinrichtungen A insgesamt, als auch einzeln verschwenkt werden. Entsprechend der Schwenkposition wird der Zugriff auf die jeweilige Aufbewahrungseinrichtung A freigegeben oder versperrt. Es ist denkbar, dass die Aufbewahrungseinrichtung mit einem Rollo 111 oder einem ähnlichen Verschlussmechanismus ausgestattet sind. Über das Rollo 111 kann der wannenförmige Aufnahmebehälter 1 verschlossen bzw. freigegeben werden.

### Bezugszeichenliste

- A: Aufbewahrungseinrichtung
- M: Mittelkonsole
- 1: Aufnahmebehälter
- 2: Fach
- 3: Längselement
- 4: Querelement
- 5: Rahmen
- 6: Rahmen
- 7: Schnur
- 8: Schnur
- 9: Laufschiene
- 10: Anschlusselement
- 11: Aussparung
- 12: Nase
- 13: Verriegelung / Entriegelung
- 20: Rahmen
- 21: Kammstruktur
- 30: Kufe
- 40: U-förmiger Rahmen
- 41: U-förmiger Rahmen
- 42: Seitenschenkel
- 43: Bodenschenkel
- 44: Langloch
- 45: Langloch
- 46: Splint
- 47: Kappen
- 50: Mittelstück
- 51: Teleskopelemente
- 70: Klappelement
- 71: Achse
- 80: Teilungselement
- 81: Führungsschlitz
- 82: Formhälfte
- 83: Teleskopwand
- 84: Griffbereich
- 85: Nase
- 86: Aussparung
- 90: Schacht
- 100: Paternosterführung
- 101: Handrad
- 110: Achse
- 111: Rollo / Klappe

## Patentansprüche

1. Aufbewahrungseinrichtung (A) für eine Mittelkonsole eines Kraftfahrzeuges, umfassend einen wannenförmigen Aufnahmebehälter (1), wobei der wannenförmige Aufnahmebehälter mit mindestens einem Teilungselement (80) ausgestattet ist, wobei das Teilungselement (80) dazu eingerichtet ist, den wannenförmigen Aufnahmebehälter (1) in mindestens zwei Fächer (2) zu unterteilen, **dadurch gekennzeichnet, dass** das mindestens eine Teilungselement (80) teleskopierbar ausgestaltet ist.

2. Aufbewahrungseinrichtung nach Anspruch 1, **dadurch gekennzeichnet, dass** der Aufnahmebehälter (1) mit Führungsschlitzen (81) zum Einstecken des Teilungselementes ausgestattet ist.

3. Aufbewahrungseinrichtung nach Anspruch 1 oder 2, **dadurch gekennzeichnet, dass** das Teilungselement (80) eine Formhälfte (82) und eine Teleskopwand (83) umfasst, wobei die Teleskopwand (83) gegenüber der Formhälfte (82) verschoben werden kann.

4. Aufbewahrungseinrichtung nach einem der Ansprüche 1 bis 3, **dadurch gekennzeichnet, dass** die Formhälfte (82) zumindest abschnittsweise als Griffbereich (84) ausgestaltet ist.

5. Aufbewahrungseinrichtung nach einem der Ansprüche 1 bis 4, **dadurch gekennzeichnet, dass** das Teilungselement (80) mit einer Nase (85) ausgestattet ist, die zum Einstecken in eine Aussparung im Kopfbereich des Aufnahmebehälters (1) geeignet ist.

## Claims

1. Storage device (A) for a central console of a motor vehicle, comprising a tub-shaped receiving container (1), wherein the tub-shaped receiving container is equipped with at least one dividing element (80), wherein the dividing element (80) is designed to divide the tub-shaped receiving container (1) into at least two compartments (2), **characterized in that** the at least one dividing element (80) is of telescopic configuration.

2. Storage device according to Claim 1, **characterized in that** the receiving container (1) is equipped with guide slots (81) for the insertion of the dividing element.

3. Storage device according to Claim 1 or 2, **characterized in that** the dividing element (80) comprises a moulded half (82) and a telescopic wall (83), wherein the telescopic wall (83) can be displaced in relation to the moulded half (82).

4. Storage device according to one of Claims 1 to 3, **characterized in that** the moulded half (82) is at least partially configured as a gripping region (84).

5. Storage device according to one of Claims 1 to 4, **characterized in that** the dividing element (80) is equipped with a lug (85) which is suitable for inserting into a recess in the head region of the receiving container (1).

## Revendications

1. Dispositif de stockage (A) pour une console centrale d'un véhicule automobile, comprenant un récipient de logement (1) en forme de bac, le récipient de logement en forme de bac étant muni d'au moins un élément de séparation (80), l'élément de séparation (80) étant prévu pour diviser le récipient de logement (1) en forme de bac en au moins deux compartiments (2), **caractérisé en ce que** l'au moins un élément de séparation (80) est configuré de manière télescopique.

2. Dispositif de stockage selon la revendication 1, **caractérisé en ce que** le récipient de logement (1) est muni de fentes de guidage (81) pour l'insertion de l'élément de séparation.

3. Dispositif de stockage selon la revendication 1 ou 2, **caractérisé en ce que** l'élément de séparation (80) comprend une moitié moulée (82) et une paroi télescopique (83), la paroi télescopique (83) pouvant être déplacée par rapport à la moitié moulée (82).

4. Dispositif de stockage selon l'une quelconque des revendications 1 à 3, **caractérisé en ce que** la moitié moulée (82) est réalisée au moins en partie sous forme de zone de préhension (84).

5. Dispositif de stockage selon l'une quelconque des revendications 1 à 4, **caractérisé en ce que** l'élément de séparation (80) est muni d'un nez (85) qui est approprié pour être enfiché dans un évidement dans une région de tête du récipient de logement (1).
